Europäisches Patentamt

European Patent Office

Office européen des brevets

(19)

(11) Publication number: **0 044 240**
**A1**

## (12) EUROPEAN PATENT APPLICATION

(21) Application number: **81401036.9**

(51) Int. Cl.³: **H 01 M 6/16**

(22) Date of filing: **26.06.81**

(30) Priority: **27.06.80 US 163497**

(43) Date of publication of application:
**20.01.82 Bulletin 82/3**

(84) Designated Contracting States:
**CH DE FR GB LI**

(71) Applicant: **UNION CARBIDE CORPORATION**
**270, Park Avenue**
**New York, N.Y. 10017(US)**

(72) Inventor: **Leger, Violeta Zilionis**
**5415 Sunset Oval**
**North Olmsted Ohio 44070(US)**

(74) Representative: **Rinuy, Guy et al,**
**14, Avenue de la Grande Armée**
**F-75017 Paris(FR)**

(54) **Non-aqueous cells employing cathodes of heat-treated manganese dioxide and a propylene-carbonate-dimethoxy-ethane-lithium-trifluoro-methane sulfonate electrolyte.**

(57) The present invention deals with nonaqueous cells employing heat-treated $MnO_2$ cathodes and a propylene carbonate-dimethoxyethane-lithium trifluoromethane sulfonate electrolyte.

A nonaqueous cell according to the invention comprises an active metal anode such as lithium, a manganese dioxide-containing cathode which contains less than 1 weight percent water in the manganese dioxide and a liquid organic electrolyte comprising lithium trifluoromethane sulfonate ($LiCF_3SO_3$) dissolved in propylene carbonate (PC) and dimethoxyethane (DME).

These cells exhibit excellent manganese dioxide utilization over a wide temperature range.

EP 0 044 240 A1

COMPLETE DOCUMENT

Croydon Printing Company Ltd.

TITLE MODIFIED
see front page

NONAQUEOUS CELLS EMPLOYING HEAT-TREATED MnO$_2$ CATHODES AND A PROPYLENE CARBONATE-DIMETHOXY-ETHANE-LITHIUM TRIFLUOROMETHANE SULFONATE ELECTROLYTE

The invention relates to a nonaqueous cell utilizing a highly active metal anode, a manganese dioxide-containing cathode which contains less than about 1 percent water based on the weight of the manganese dioxide and a liquid organic electrolyte solution comprising lithium trifluoromethane sulfonate dissolved in propylene carbonate and dimethoxyethane.

The development of high energy battery systems requires the compatibility of an electrolyte possessing desirable electrochemical properties with highly reactive anode materials, such as lithium, sodium, and the like and the efficient use of high energy density cathode materials, such as manganese dioxide. The use of aqueous electrolytes is precluded in these systems since the anode materials are sufficiently active to react with water chemically. It has therefore been necessary, in order to realize the high energy density obtainable through use of these highly reactive anodes and high energy density cathodes, to turn to the investigation of nonaqueous electrolyte systems and more particularly to nonaqueous organic systems.

The term "nonaqueous organic electrolyte" in the prior art refers to an electrolyte which is composed of a solute, for example, a salt or complex salt of Group 1-A, Group II-A or Group III-A elements of the Periodic Table, dissolved in an appropriate nonaqueous organic solvent. Conventional solvents include propylene carbonate, ethylene carbonate or $\gamma$-butyrolactone.

A multitude of solutes is known and recommended for use but the selection of a suitable solvent has been particularly troublesome since many of those solvents which are used to prepare electrolytes sufficiently conductive to permit effective ion migration through the solution are reactive with the highly active anodes mentioned above. Most investigators in this area, in search of suitable solvents, have concentrated on aliphatic and aromatic nitrogen-and oxygen-containing compounds with some attention given to organic sulfur-, phosphorus-and arsenic-containing compounds. The results of this search have not been entirely satisfactory since many of the solvents investigated still could not be used effectively with high energy density cathode materials, such as manganese dioxide ($MnO_2$), and were sufficiently corrosive to lithium anodes to prevent efficient performance over any length of time.

Although manganese dioxide has been mentioned as a cathode for cell applications, manganese dioxide inherently contains an unacceptable amount of water, both of the adsorbed and bound (absorbed) types, which is sufficient to cause anode (lithium) corrosion along with its associated hydrogen evolution. This type of corrosion that causes gas evolution is a serious problem in sealed cells, particularly in miniature type button cells. In order to maintain overall battery-powered electronic devices as compact as possible, the electronic devices are usually designed with cavities to accommodate the miniature cells as their power source. The cavities are usually made so that a cell can be snugly positioned therein thus making electronic contact with appropriate terminals within the device. A major potential problem in the use of cell-powered devices of this nature is that if the gas evolution causes the cell to bulge then the cell could become wedged within the cavity. This could result in damage to the device. Also, if electrolyte leaks from the cell it could cause damage to the device. It is therefore important that the physical dimensions of the cell's housing remain constant during discharge and that the cell will not leak any electrolyte into the device being powered. Consequently, the manganese dioxide for use in this invention has to be heat treated to lower its water content to less that 1 percent by weight as is known in the battery art.

U.S. Patent 4,133,856 discloses a process for producing a $MnO_2$ electrode (cathode) for nonaqueous cells whereby the $MnO_2$ is initially heated within a range of 350° to 430°C so as to substantially remove both the adsorbed and bound water and then, after being formed into an electrode with a conductive agent and binder it is further heated in a range of 200° to 350°C prior to its assembly into a cell. British Patent 1,199,426 also discloses the heat treatment of $MnO_2$ in air at 250° to 450°C to substantially remove its water component.

Propylene carbonate and dimethoxyethane have been employed as solvents for a wide range of solutes as disclosed in U.S. Patent 4,158,723. Specifically, this patent discloses a Li/PbO cell containing $Bi_2O3$, $Sb_2O_3$ or $SnO_2$ additive in the PbO cathode and an

electrolyte of a mixture of an ether (e.g. dimethoxyethane) and an ester (e.g. propylene carbonate) with a solute such as lithium trifluoromethane sulfonate.

While the theoretical energy, i.e., the electrical energy potentially available from a selected anode-cathode couple, is relatively easy to calculate, there is a need to choose a nonaqueous electrolyte for a couple that permits the actual energy produced by an assembled battery to approach the theoretical energy. The problem usually encountered is that it is practically impossible to predict in advance how well, if at all, a nonaqueous electrolyte will function with a selected couple. Thus a cell must be considered as a unit having three parts: a cathode, an anode, and an electrolyte, and it is to be understood that the parts of one cell are not predictably interchangeable with parts of another cell to produce an efficient and workable cell.

It is an object of the present invention to provide a nonaqueous cell employing among other components a manganese dioxide-containing cathode wherein the water content is less than 1 weight percent based on the weight of the manganese dioxide and a stable electrolyte solution of lithium trifluoromethane sulfonate dissolved in propylene carbonate and dimethoxyethane which permits excellent cathode utilization over a wide range of temperatures.

It is another object of the present invention to provide a heat-treated manganese dioxide nonaqueous cell employing a lithium anode.

It is another object of the present invention to provide a lithium/$MnO_2$ nonaqueous cell employing a liquid organic electrolyte consisting of lithium trifluoromethane sulfonate dissolved in propylene carbonate and dimethoxyethane.

The invention provides a novel high energy density nonaqueous cell comprising a highly active metal anode, a manganese dioxide-containing cathode wherein the manganese dioxide has a water content of less than 1 weight percent based on the weight of the manganese dioxide and a liquid organic electrolyte comprising lithium trifluoromethane sulfonate dissolved in propylene carbonate and dimethoxyethane. Preferably the water content should be lower than 0.5 weight percent and most preferably below about 0.2 weight percent.

The water inherently contained in both electrolytic and chemical types of manganese dioxide can be substantially removed by various treatments. For example, the manganese dioxide can be heated in air or an inert atmosphere at a temperature of 350°C for about 8 hours or at a lower temperature for a longer period of time. Care should be taken to avoid heating the manganese dioxide above its decomposition temperature which is about 400°C in air. In oxygen atmospheres, higher temperatures may be employed. In accordance with this invention the manganese dioxide should be heated for a sufficient period of time to insure that the water content is reduced below about 1 weight percent, preferably below about 0.5 and most preferably below about 0.2 weight percent based on the weight of the manganese dioxide. An amount of water above about 1 weight percent would react with the highly active metal anode, such as lithium, and cause it to corrode thereby resulting in hydrogen evolution. As stated above, this could result in physical distortion of the cell and/or electrolyte leakage from the cell during storage or discharge.

To effectively remove the undesirable water from $MnO_2$, or $MnO_2$ mixed with a conductive agent and a suitable binder, to the level necessary to practise this invention, it is believed necessary that both the adsorbed and bound water be substantially removed. After the water removal treatment has been completed, it is essential that the manganese dioxide be shielded to prevent adsorption of water from the atmosphere. This could be accomplished by handling the treated manganese dioxide in a dry box or the like. Alternatively, the treated manganese dioxide combined with a conductive agent and a suitable binder could be heat-treated to remove water that could have been adsorbed from the atmosphere.

Preferably, the manganese dioxide should be heat-treated to remove its water content to below about 1 weight percent and then it can be mixed with a conductive agent such as graphite, carbon or the like and a binder such as Teflon (trademark for polytetrafluoroethylene), ethylene acrylic acid copolymer or the like to produce a solid cathode. If desired, a small amount of the electrolyte can be incorporated into the manganese dioxide mix.

An added possible benefit in the removal of substantially all the water from manganese dioxide is that if small amounts of water are present in the cell's electrolyte then the manganese dioxide will adsorb the main portion of that water from the electrolyte and thereby prevent or substantially delay the reaction of the water with the anode such as lithium. In this situation, the manganese dioxide will act as an extracting agent for the water impurities in the organic solvents.

The specific electrolyte of this invention propylene carbonate (PC)-dimethoxyethane (DME)-LiCF$_3$SO$_3$ has been found to be an extremely stable electrolyte for lithium cells that permits excellent manganese dioxide utilization over a wide temperature range. Although there are hundreds of electrolyte solutions for use in nonaqueous cell systems, many will not provide efficient cathode utilization over a wide range of temperatures and many will not efficiently function with manganese dioxide-containing cathodes. The conductivity of electrolyte solutions decreases as the temperature decreases and thus many electrolyte solutions can function efficiently only at room temperature and above. To compensate for low temperature environments, additives have sometimes been used in electrolyte solutions to render the solutions more conductive. Since nonaqueous cells are rather delicate electrochemical systems, any additives, although improving one aspect of the system, may be detrimental to another aspect of the system. The electrolyte solution of the present invention has been found to efficiently work over a wide range of temperatures with heat-treated manganese dioxide cathodes and lithium anodes.

The ratio of propylene carbonate to dimethoxyethane based on the solvent volume can vary from about 80:20 to 20:80 and is preferably about 50:50. The lithium trifluoromethane sulfonate can vary from about 0.5 molar up to its saturation in the electrolyte solution and preferably is about 1 molar concentration. Generally, the conductivity should be at least $10^{-4}$ ohm$^{-1}$ cm$^{-1}$.

Highly active metal anodes suitable for this invention include lithium (Li), potassium (K), sodium (Na), calcium (Ca), magnesium (Mg), aluminum (Al), and their alloys. Of these active metals, lithium would be preferred because in addition to being a ductile, soft metal that can easily be assembled in a cell, it possesses the highest energy-to-weight ratio of the group of suitable anode metals.

<u>EXAMPLE</u>

Several button cells (4.19 mm high & 11.6 mm in diameter) were constructed employing a cathode consisting of 0.36 gram mix containing 86% by weight heat-treated $MnO_2$, 8.5% by weight graphite, 2% by weight acetylene black and 3.5% by weight polytetrafluoroethylene, a lithium anode (0.03 gram), a two layer separator (nonwoven polypropylene and nonwoven glass), and about 140 μl of an electrolyte consisting of about 1M $LiCF_3SO_3$ in a 50:50 volume ratio of propylene carbonate and dimethoxyethane. Each cell was discharged across a 30 k-ohm load to a 2.0-volt cutoff and the mAh output was calculated. The data so obtained are shown in the Table.

TABLE

| Temperature Conditions | mAh to 2.0-volt cutoff |
|---|---|
| 21°C | 82 |
| 35°C | 81 |
| 0°C | 71 |
| *21°C | 78 |
| **21°C | 79 |

\*   after storage for 3 months at 45°C

\*\*   after storage for 1 month at 54°C

As evident from the data shown in the Table, the specific cell system of this invention exhibited excellent manganese dioxide utilization over a wide temperature range.

0044240

CLAIMS

1. A nonaqueous cell comprising a metal anode, a manganese dioxide-containing cathode wherein the manganese dioxide has a water content of less than 1 weight percent based on the weight of the manganese dioxide and a liquid organic electrolyte comprising lithium trifluoromethane sulfonate dissolved in propylene carbonate and dimethoxyethane.

2. The nonaqueous cell of claim 1 wherein the volume ratio of propylene carbonate to dimethoxyethane is between about 80:20 and 20:80.

3. The nonaqueous cell of claim 1 or 2 wherein the concentration of the lithium trifluoromethane sulfonate in the liquid organic electrolyte varies from about 0.5 molar up to its saturation in the liquid organic electrolyte.

4. The nonaqueous cell of claim 1 or 2 wherein the concentration of the lithium trifluoromethane sulfonate in the liquid organic electrolyte is about 1 molar.

5. The nonaqueous cell of claim 2 wherein the water content is less than 0.5 weight percent based on the weight of the manganese dioxide.

6. The nonaqueous cell of claim 5 wherein the water content is less than 0.2 weight percent based on the weight of the manganese dioxide.

7. The nonaqueous cell of claim 2 wherein the cathode comprises manganese dioxide, a conductive agent and a binder.

0044240

Application number

EP 81 40 1036

European Patent
Office

**EUROPEAN SEARCH REPORT**

| DOCUMENTS CONSIDERED TO BE RELEVANT | | | CLASSIFICATION OF THE APPLICATION (Int Cl ³) |
|---|---|---|---|
| Category | Citation of document. with indication, where appropriate, of relevant passages | Relevant to claim | |
| | US - A - 4 129 686 (MITCELL J. KADUBOSKI) <br> * Claim 12; column 5, lines 52-63 * | 1 <br> * | H 01 M 6/16 |
| | GB - A - 2 007 903 (UNION CARBIDE) <br> * Claim 5; page 3, lines 102-119 * | 1 | |
| | US - A - 4 142 028 (VIOLETA Z. LEGER, G.E. BLOMGREN) <br> * Claim 1; column 3, line 34; column 4, lines 38-41; line 68; column 5, line 9; column 6, lines 1-12; lines 44,45,51; example IV * | 1,7 | TECHNICAL FIELDS SEARCHED (Int. Cl.³) <br><br> H 01 M 4/50 <br> 6/16 <br> 10/40 |
| DA | US - A - 4 133 856 (HIRONOSUKE, IKEDA, M.HARA, S.NARUKAWA) <br> * Claim 1 * | | |
| A | US - A - 4 195 122 (NEHEMIAH MARGALIT) <br> * Column 2, lines 13-31 * | | CATEGORY OF CITED DOCUMENTS |
| PE | GB - A - 2 057 180 (DURACELL INT.) <br> * Examples 4,1,2; claims 5,7,8,9 * <br> & FR - A - 2 464 566 <br> & DE - A - 3 031 902 <br><br> -- <br> ./. | 1,3,4, 7 | X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family <br> corresponding document |

The present search report has been drawn up for all claims

| Place of search <br> The Hague | Date of completion of the search <br> 07-10-1981 | Examiner <br> D'HONDT |
|---|---|---|

EPO Form 1503 1 06.78

## 0044240

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| PE | <u>EP - A - 0 030 868</u> (ESB)<br>  * Claims 1-5,7,8 *<br>       -- | 1-4 | |
| PE | <u>GB - A - 2 054 253</u> (UNION CARBIDE)<br>  * Claims 1-9; page 2, lines 54-59 *<br>& FR - A - 2 460 046<br>& DE - A - 3 022 977 | 1-7 | |
| | ---- | | TECHNICAL FIELDS SEARCHED (Int. Cl.³) |

EPO Form 1503.2  06.78